(19) Europäisches Patentamt
European Patent Office
Office européen des brevets

(11) **EP 2 101 427 A1**

(12) **EUROPEAN PATENT APPLICATION**

(43) Date of publication:
**16.09.2009 Bulletin 2009/38**

(51) Int Cl.:
**H04B 17/00** $^{(2006.01)}$

(21) Application number: **08380093.8**

(22) Date of filing: **14.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicants:
• **Vodafone Group PLC**
 **Newbury**
 **Berkshire RG14 2FN (GB)**
• **Vodafone España, S.A.**
 **28108 Alcobendas (Madrid) (ES)**
 Designated Contracting States:
 **ES**

(72) Inventors:
• **Le Pézennec, Yannick**
 **28003 Madrid (ES)**
• **Sierra Marco, Manuel**
 **28015 Madrid (ES)**
• **Dominguez Romero, Franciso Javier**
 **28032 Madrid (ES)**

(74) Representative: **Carpintero Lopez, Francisco et al**
 **Herrero & Asociados, S.L.**
 **Alcalá 35**
 **28014 Madrid (ES)**

(54) **Method and system for measuring geometry experienced by end users in a network in operation**

(57) Method for measuring a geometry G experienced by a user equipment (10) in a network (40) in operation, wherein such geometry is computed according to the following formula:

$$G = \frac{I_{or}}{\dfrac{CPICH\,Tx\,power}{CPICH\,Ec\,/\,No} - I_{or} - \dfrac{Nt\,.\,CPICH\,Tx\,power}{CPICH\,RSCP}}$$

where:
- $I_{or}$ is the average transmitted carrier power of the cell serving said user equipment as measured by the serving base station (20) over a given period of time,
the denominator of G refers to the total interference from cells other than the serving cell
- *CPICH Tx power* is the power setting of the CPICH channel in the serving cell as configured in the network,- *CPICH RSCP* and *CPICH Ec/No* are user equipment measurements reported over said period of time, and
- $N_t$ is the thermal noise generated within the user equipment.
The invention also refers to a system for measuring a geometry G experienced by a user equipment (10) in a network in operation (40).

UTRAN **40**

**Trace set-up over UTRAN**
(including IMSI's, cell ID's, measurement setup)

**30**

**RNC**

**50**

Tracing system

cell trace

**Tx carrier power ($I_{or}$) measurements**

**CPICH measurements** (CPICH RSCP, CPICH Ec/No)

IMSI trace

**20**

**Node B**

**10**

**UE**

**FIG. 1**

**Description**

Method and system for measuring geometry experienced by end users in a live network.

Field of the invention

The present invention lies in the field of mobile communications, and more specifically in measuring the quality of the downlink radio conditions within the coverage area of a live network as experienced by the end user.

Background of the invention

It is well-known that abbreviations and acronyms are frequently used in the mobile telephony field. Below is a glossary of acronyms and terms used throughout the present specification:

- CPICH (Common Pilot Channel in UMTS and some other CDMA communications systems): CPICH is a downlink channel broadcast by Node-Bs with constant power and of a known bit sequence.
- CPICH Ec/No (Energy per chip over Noise): ratio of the energy per chip from the pilot to the total power spectral density received by the end user. This measurement quantity can be defined for any radio access network (e.g. CDMA2000, UMTS, LTE). It is more specifically used in UMTS to measure and characterise the quality of the pilot received by the end user. This measurement is standard in UMTS and defined in 3GPP TS 25.215.
- CPICH RSCP (Received Signal Code Power): received power measured on the Primary CPICH. It is a measurement quantity which can be defined for any radio access network (e.g. CDMA2000, UMTS, LTE). It is more specifically used in UMTS to measure and characterise the strength of the pilot received by the end user. Also, while RSCP can be measured in principle on the downlink (DL) as well as on the uplink (UL), it is usually associated with the downlink in UMTS. The CPICH RSCP is measured by the User Equipment and reported to the Node-B. This measurement is standard in UMTS and defined in 3GPP TS 25.215.
- $I_{or}$ is the average transmitted carrier power of the serving cell (serving the user equipment) as measured by the base station over a given period of time. This measurement is standard in UMTS and defined in 3GPP TS 25.215.
- HSDPA: High-Speed Downlink Packet Access.
- OMC: Operation and Maintenance Centre.
- QAM: Quadrature Amplitude Modulation.
- UE: User Equipment.
- UTRAN: UMTS Terrestrial Radio Access Network.
- Coupling loss: defined as the loss between the antenna connector of the base station and the antenna connector of the UE.

In order to understand the radio performance that can be achieved for any downlink feature in a given network, it is very often necessary to perform drive tests that do not provide a satisfying picture of the user experience of the radio network. In mobile networks a large proportion of users are located indoors, an environment in which the radio conditions are known to be dramatically different from the typical outdoor radio conditions.

Assessing the coverage of the live network as experienced by the end user for downlink features such as high order modulation for HSDPA (16QAM, 64QAM) is only possible either via drive tests or via measurements which are not accurate enough on their own to characterise the downlink radio conditions experienced by the user (e.g. CPICH Ec/No, CQI), and therefore, not good enough to assess the benefits of these features.

A useful measurement to characterise quality of the radio conditions within the coverage area in a live network independently from the type of terminal (irrespective of the receiver performance) is the geometry corresponding to the ratio of own to other cell interference at the user terminal antenna reference point. The geometry is not only used in simulations but also in the testing of the terminals (see 3GPP TS 34.121 UE conformance testing specification). Hence by evaluating the geometry of the network and using performance information from simulations and/or UE conformance testing, it is possible estimate the coverage performance of features such as HSDPA without requiring any specific field test campaign.

The current bottleneck is that, as of today, estimation of the geometry can only be achieved either by simulations, either in controlled environments such as a lab environment. There is no existing method to measure the geometry as perceived by the end user in a live network. In a live network, it is not possible to measure the interference from other cells as perceived by the end user ($I_{oc}$) because such a measurement is not supported by the user equipment (for example, this is not available through the set of measurements defined in the 3GPP standard). With the aim to determine the geometry experienced by a user, it is neither possible to measure the $I_{oc}$ through the use of specific measurement tools.

US patent US-6466797 describes a method for extracting a useful estimation of the radio environment of a mobile station based on measurements provided by the mobile station which in turn are based on its position. This document describes a procedure to collect measurements from mobiles with a given position to draw a map with the collected information in the network, but it does not allow to measure the geometry.

Also US patent published US-2005/272429 describes a method for approximating cell geometry in a cellular transmission system. But this cell geometry in this US document refers to the size and shape of the cell, as opposed to the geometry metric used to characterise the radio conditions experienced by a mobile user.

Summary of the invention

The invention refers to a method and system for measuring the geometry experienced by a user equipment in a live mobile network according to claims 1 and 2, respectively. Preferred embodiments of the system are defined in the dependent claims.

The present invention aims at measuring the geometry in a live network as experienced by the end users based on the use of measurements reported by a live user and by the live network.

A first aspect of the invention refers to a method for measuring the geometry G experienced by a user equipment in a live network, wherein such geometry is computed according to the following formula:

$$G = \frac{I_{or}}{\dfrac{CPICH\,Tx\,power}{CPICH\,Ec\,/\,No} - I_{or} - \dfrac{Nt.CPICH\,Tx\,power}{CPICH\,RSCP}},$$

where:

- $I_{or}$ is the average transmitted carrier power of a cell serving said user equipment as measured by the serving base station over a given period of time,
- *CPICH Tx power* is the power setting of the CPICH channel in the serving cell as configured in the network,
- *CPICH RSCP* and *CPICH Ec/No* are user equipment measurements reported over said period of time, and
- $N_t$ is the thermal noise generated within the user equipment.

The computation of the geometry as experienced by the end user is made as a function of the measurements indicated above (*CPICH RSCP* and *CPICH Ec/No* as measured in the user equipment(s) and $I_{or}$ as measured by a the serving base station), as well as the CPICH power setting (*CPICH Tx power*) in the network, and the thermal noise $N_t$ generated within the user equipment.

The approach defined in the present invention allows to determine the geometry experienced by the user without requiring to measure the interference from other cells $I_{oc}$. Indeed, this network-centred approach makes it possible to measure the geometry by remotely collecting the required measurements for the different end users, i.e. no in-the field measurement campaign is required.

A second aspect of the present invention relates to a system for measuring a geometry G experienced by a user equipment in a live mobile network, which comprises:

- a tracing system connected to a radio network controller of the mobile network, which, for each user equipment of a defined group of user equipment, is configured to receive from the radio network controller:

- the average transmitted carrier power $I_{or}$ of the cell serving the traced user equipment as measured by the serving base station over a given period of time;
- the power setting of the CPICH channel *CPICH Tx power* in the serving cell as configured in the network,
- the following user equipment measurements reported over said given period of time: *CPICH RSCP*, Received Signal Code Power of the CPICH channel, and *CPICH Ec/No,* Energy per chip over Noise of the CPICH channel; and wherein the tracing system comprises processing means for computing such geometry according to the following formula:

$$G = \frac{I_{or}}{\dfrac{CPICH\,Tx\,power}{CPICH\,Ec/No} - I_{or} - \dfrac{Nt.CPICH\,Tx\,power}{CPICH\,RSCP}}$$

where $N_t$ is the thermal noise generated within the user equipment.

The tracing system can be hosted in an operation and maintenance centre OMC of the mobile network.

The invention is based on a per sample calculation of the geometry via post-processing of measurements reported from user equipments (i.e. IMSI traces) and cell transmitted power from base stations (i.e. cell traces).

The present invention not only provides a method for measuring the geometry as experienced by live user equipments in a live network. It also provides a means for accurately assessing the downlink radio conditions in the network, in order to help evaluating the coverage of key radio features, e.g. through the computation of the distribution of the geometry on a given area of the live network.

For example, applying the geometry distribution allows to assess the potential throughput that can be achieved by end users when deploying new packet-switched radio technology improvement features. New features allow to reach high peak rates, the throughput increase perceived by the end user is dependent on the geometry. The higher geometry value, the higher peak rate can be achieved. This in turn allows to determine the potential of new technology and the associated deployment business cases. Thus, it allows to identify what is the likelihood of usage of features such as HSDPA 16QAM, 64QAM, and MIMO in a live network in order to support the deployment strategy as the radio network technology evolves.

The present invention also permits to perform optimisation of a mobile network. During the deployment of the network, new base stations are commissioned and optimisation tasks are done through changes in the antenna azimuth and downtilt. With the geometry measurements, it is possible to see the improvements achieved through these changes remotely.

The use of this method allows mobile operators to assess the quality of the coverage of their networks as perceived by their customers at a low operational cost, as this method allows to perform the evaluation remotely. As mentioned before, this is particularly useful for the assessment and optimisation of HSDPA performance.

Known methods to measure the downlink performance such as for HSDPA, typically resort to drive tests measuring the throughput as a function of the CQI, CPICH Ec/No, and/or CPICH RSCP which have proven to be costly and not fully representative of the live network performance.

Brief description of the drawings

To complete the description and in order to provide for a better understanding of the invention, a set of drawings is provided. Said drawings form an integral part of the description and illustrate preferred embodiments of the invention, which should not be interpreted as restricting the scope of the invention, but just as examples of how the invention can be embodied. The drawings comprise the following figures:

Figure 1 shows a block diagram representing the collection of geometry measurement samples via a centralised tracing system.
Figure 2 schematically describes an example of the overall process that a mobile operator would follow to perform a measurement of the geometry in a live network.
Figure 3 shows an example of geometry distribution obtained according to the invention.

Detailed description of the preferred embodiments

Reference will now be made in detail to a preferred embodiment of the method of the present invention, for measuring the geometry G in a live network 40 as experienced by the end user(s) 10.

The present invention seeks to measure the geometry of a live network, the geometry being defined in 3GPP standard TS 25.101 as:

$$Geometry(G) = \frac{\hat{I}_{or}}{I_{oc}} \qquad\qquad [1]$$

where:

- $\hat{I}_{or}$ is the total received power from the serving cell as measured by the user equipment (UE) at the antenna connector.
- $I_{oc}$ is the total interference from cells other than the serving one at the UE antenna connector.

However, as it has been indicated before, $I_{oc}$ is not measurable by an end user equipment.

Therefore, the present invention proposes to find a way to derive the $I_{oc}$ from standard measurements available in any user equipment such as CPICH Ec/No and CPICH RSCP measurements in UMTS. The CPICH Ec/No as defined in 3GPP standard TS 25.215 can be expressed as follows:

$$CPICH\ Ec\ /\ No = \frac{CPICH\ RSCP}{UTRA\ RSSI} = \frac{CPICH\ RSCP}{\hat{I}_{or} + I_{oc} + N_t} \quad [2]$$

The UTRA RSSI corresponds to the total power of the signal received in the operating band (5 MHz for UMTS) which can be expressed as the sum of power coming from the serving cell ($\hat{I}_{or}$), the power coming from the cells other than the serving one ($I_{oc}$) potentially including interference from other systems, as well as the thermal noise generated within the equipment ($N_t$). The latter is not a measurement that can be reported to the network, hence it is necessary to take into account a typical value for $N_t$. Lab measurements of several end user equipment show that an empirical value of 7 dB can be taken for the noise factor ($N_t$ =KTBF where F=7 dB). It is usually reasonable to neglect $N_t$ as this quantity is for a majority of scenarios negligible with respect to $\hat{I}_{or}$ and $I_{oc}$. In any case the above empirical value is sufficient to refine the calculation for the scenarios where the geometry is very low (e.g. cell edge).

Hence $I_{oc}$ can be expressed as follows:

$$I_{oc} = \frac{CPICH\ RSCP}{CPICH\ Ec\ /\ No} - \hat{I}_{or} - Nt \quad [3]$$

$\hat{I}_{or}$ can be expressed as follows:

$$\hat{I}_{or} = \frac{I_{or}}{coupling\ loss} \quad [4]$$

And the coupling loss experienced by the user in its present location through the CPICH RSCP measurement based on the knowledge of the CPICH Tx power in the network (available at the OMC):

$$coupling\ loss = \frac{CPICH\ Tx\ power}{CPICH\ RSCP} \quad [5]$$

which leads to:

$$\hat{I}_{or} = \frac{Ior\ .CPICH\ RSCP}{CPICH\ Tx\ power} \quad [6]$$

The geometry can be obtained as follows:

$$G = \cfrac{I_{or}}{\cfrac{CPICH\,Tx\,power}{CPICH\,Ec\,/\,No} - I_{or} - \cfrac{Nt\,.CPICH\,Tx\,power}{CPICH\,RSCP}} \qquad [7]$$

This expression allows to compute the geometry based on known network and user equipment parameters and measurements from base stations and end users in the live network.

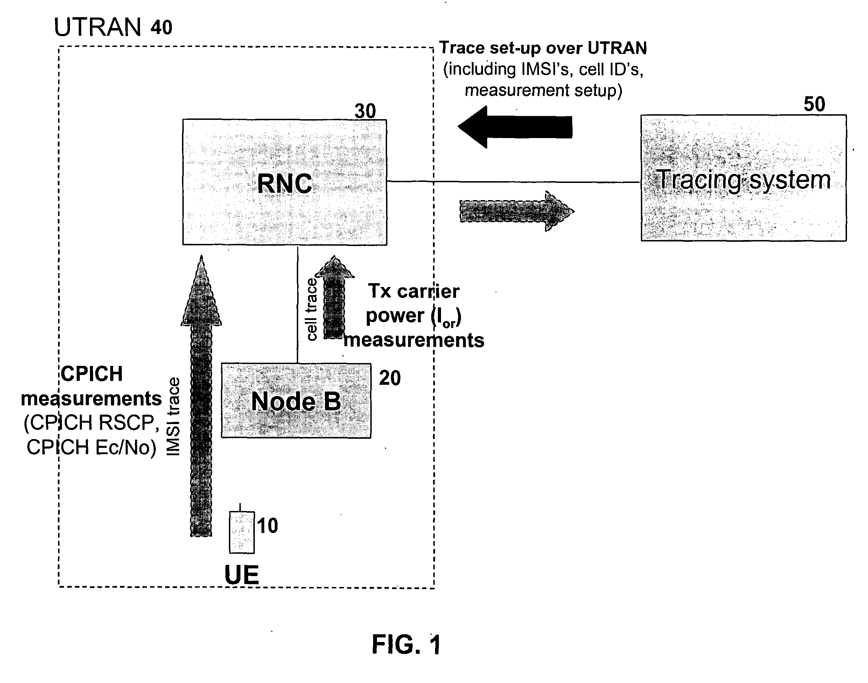

Figure 1 represents the setup of the measurements in a live network. It is possible to host in the Operation and Maintenance Centre (OMC) a tracing system 50 which is configured to start and finish the measurements, and to process the measurements reports coming from the network 40 and from the end user equipments 10.

The Radio Network Controller 30 (RNC) reports the transmission Tx carrier power measurements $I_{or}$ coming from the base station 20, and the CPICH Ec/No and CPICH RSCP coming from the user equipment(s) 10 to the tracing system 50.

The calculation of an individual geometry sample G for a given user in the live network requires therefore a sample of each of the above measurements (referred hereafter as a 'geometry measurement sample') over a given or predetermined period of time. Theoretically, the period of time to report measurements from the user equipment (CPICH RSCP and CPICH Ec/No), and the period of time for the network measurements ($I_{or}$) should be the same. And, according to the 3GPP standard each of these measurements is carried out over a period of 100 ms; however, in order to avoid signalling overload, the measurements are reported over a period of time predetermined or pre-established by the network operator (for instance, each 5 seconds when the user equipment is on).

In order to ensure a satisfying level of accuracy in the determination of the geometry it is important that the CPICH RSCP, CPICH Ec/No and $I_{or}$ measurements are synchronised to a sufficient level. Then, if the measurements are started at a time t in the network, the measurements should start at user equipment at t+$\Delta$, with a recommended value of $\Delta$ being +/- 1 s.

In order to derive the distribution of geometry in a live network, a centralised tracing system 50 collects the geometry measurement samples over a defined cluster of cells in such a way that the derived geometry distribution is meaningful. The tracing system typically allows to trace user calls on a per RNC basis allowing to trace a large number of cells and users.

The accuracy of the derived geometry distribution depends on the size of the target cluster of cells (it is necessary to select a cluster of neighbour sites containing a sufficient number of cells, typically at least five cells), on the target number of users traced per cell, and on the target number of samples taken per user. In order to validate the derived geometry distribution, the stability of the obtained distribution can be assessed by comparing the distribution over the whole cluster against the same cluster minus one or more cells. The size of the cluster should be such that if one more cell is added to the cluster, the obtained distribution is changed in a negligible way (e.g. the median value is affected by less than 5%).

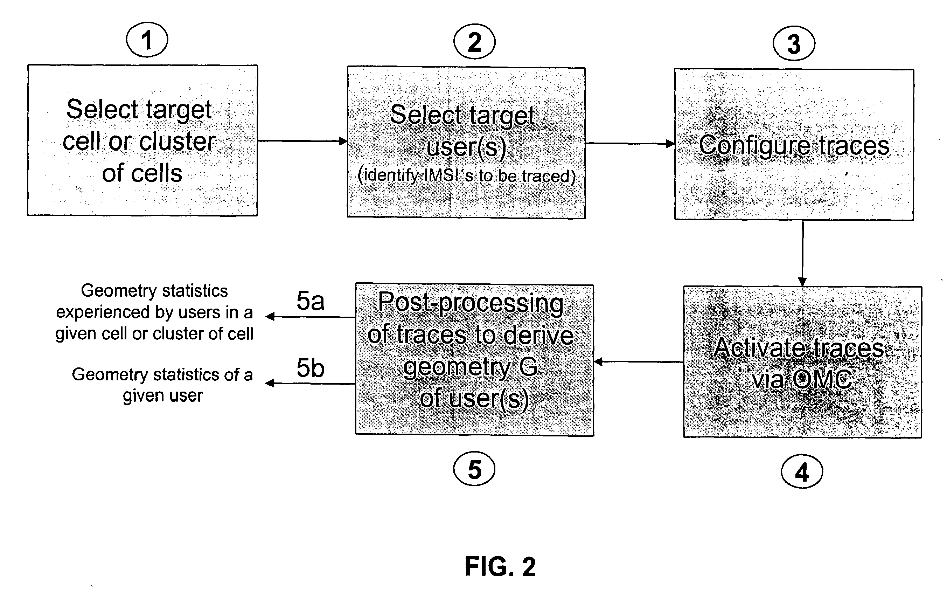

Figure 2 describes an example of the overall process that a mobile operator would have to follow for performing such a measurement of the geometry in a live network.

The process has been split into five different phases. The whole process can be done remotely from a computer. For example within Vodafone, a Vodafone employee (with the required rights for security purposes) can access from his own computer the OMC (via the IP network).

The tracing system typically resides within the OMC and allows to perform traces of specific cells and specific user equipment through their IMSI.

The mobile operator sets the target cell or cluster of cells (phase 1) and the target end users -each user is identified by its IMSI- (phase 2). It also configures the measurement settings in the tracing system (phase 3). The traces are activated via the OMC for all selected IMSI's (phase 4), and the measurements are collected and stored into files which can then be post-processed to obtain geometry statistics (phase 5).

The synchronisation between the different measurements can be controlled through the setup of the network and the user equipment measurements in the tracing system. To make sure that the collected samples are valid time stamps of measurements can be checked in the post-processing phase to make sure the user equipment and network measurements sample are time-wise consistent.

Note that the traces are performed in connected mode (i.e. whilst the user is making speech or data calls) as this allows to poll more measurement samples in a shorter time from the mobile whilst not affecting the mobile battery life. The traces could also be polled in idle mode, but the process would be slower since the measurement frequency would have to be greatly reduced in order not to have to wake the terminal frequently, which could affect the battery of the customer (each time a measurement is polled, the mobile needs to connect to the network to send the measurement).

A possible way to speed up the process of collecting samples is to select users/IMSI's who are very active, which can be known from statistics available at the OMC (the likelihood of these users making calls are higher).

In the post-processing phase (phase 5) the geometry G is calculated according to formula [7] defined above, which is based on the measurements samples collected by the tracing system. For each sample of geometry measurements collected, a geometry sample can be derived. Repeating this operation over the set of collected measurements allow to obtain a geometry distribution.

Depending on the operator needs, the geometry measurements can be done on a per cluster basis (over users in a given cell or cluster of cells -case 5a), or on a per UE basis (over a specific user -case 5b). If it is done in order to enquire about the radio conditions on a cluster of cells (network area) as described above, the geometry samples obtained can be used to produce statistics such as a geometry distribution, e.g. cumulative distribution function (cdf) which will allow the operator to assess the likelihood for an end user to have sufficient good radio conditions (example: percentile 90% of cdf, which is often used to quantify the radio conditions of users at cell edge) for a specific service. In this case, the aim of the operator is to be able to statistically characterise de radio conditions perceived by the users in the live network, in general terms,

If it is done on a specific user, the relevant IMSI is used to trace the user calls and to derive the geometry samples, which allows to assess the likelihood of this user to have sufficiently good radio conditions for a specific service. In this case, the aim of the operator is to be characterise the radio conditions of a specific user; for instance, in order to detect a problem of such user (a useful tool for the customers service department).

In the case 5a (group of users) the process is usually master than in case 5b (specific user), and more samples can be collected in less time. Indeed, in the latter case (5b) more time is usually needed, as it depends on how active the specific user is (if the target user does not make any calls, no samples can be collected).

As indicated above, this post-processing step can be done on any computer platform. Another possibility is to integrate this post-processing phase into the tracing system, e.g. within the OMC so that the it can directly generate geometry statistics on the demand of the operator on a per cell cluster or a per user basis.

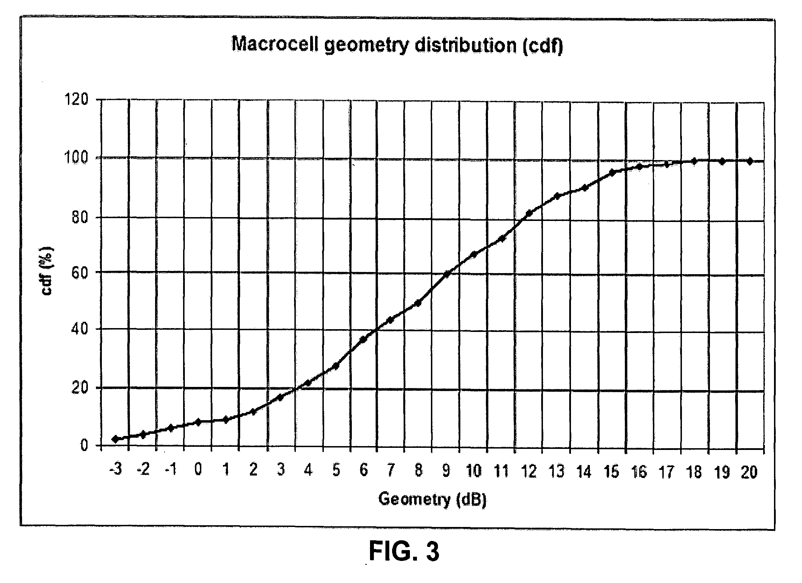

Figure 3 shows an example of processing measurement samples in order to derive geometry statistics.

Each individual sample of geometry G has been obtained according to the invention with equation [7], using a fixed value of thermal noise $N_t$ in the user equipment of -101 dBm, and being the setting of *CPICH Tx power* in the serving cell of 35 dBm.

The values of the measurements as collected by the tracing system and the corresponding geometry values are set out in the next table:

| Measurement samples | | | Geometry |
|---|---|---|---|
| Node B Tx power ($I_{or}$, dBm) | CPICH RSCP (dBm) | CPICH Ec/No (dB) | (dB) |
| User 1 | | | |
| 43.5 | -93.8 | -12.5 | -1.7 |
| 43.8 | -93.4 | -11.9 | -0.1 |
| 44.1 | -93.1 | -11.9 | 0.5 |
| 44.5 | -94.5 | -11.8 | 1.7 |
| 44.2 | -95.2 | -13 | -1.4 |
| | | | |
| User N | | | |
| 37.8 | -81 | -4.5 | 3.2 |
| 38.6 | -81.1 | -4.2 | 8.4 |
| 38.3 | -81.1 | -3.8 | 9.3 |
| 39.8 | -81.9 | -6.8 | 2.4 |
| 40.1 | -82.2 | -5.6 | 9.3 |

Once all the values of geometry samples have been computed, obtaining the corresponding geometry statistics -i.e. the cumulative distribution function (cdf), as shown in figure 3- can be done according to any know statistic procedure (for example, using an Excel sheet). For instance, if there is a total of 100000 samples, and 257 samples are in the [15-16] dB interval, the probability that the user is in conditions of having a geometry better than 15 dB and worse than 16 dB es 257/100000, i.e. 0.257%.

It is to be understood that the above disclosure is an exemplification of the principles of the invention and does not limit the invention to the illustrated embodiments.

**Claims**

1. Method for measuring an individual sample of geometry G experienced by a user equipment (10) in a live mobile network (40), wherein such individual geometry sample is computed according to the following formula:

$$G = \frac{I_{or}}{\dfrac{CPICH\,Tx\,power}{CPICH\,Ec/No} - I_{or} - \dfrac{Nt.CPICH\,Tx\,power}{CPICH\,RSCP}}$$

where:

- $I_{or}$ is the average transmitted carrier power of a cell serving said user equipment as measured by the serving base station (20) over a given period of time,
- *CPICH Tx power* is the power setting of the CPICH channel in the serving cell as configured in the network,
- *CPICH RSCP*, Received Signal Code Power of the CPICH channel and *CPICH Ec/No*, Energy per chip over Noise of the CPICH channel are user equipment measurements reported over said given period of time, and
- $N_t$ is the thermal noise generated within the user equipment.

2. System for measuring a geometry G experienced by a user equipment (10) in a live mobile network (40), which comprises:

- a tracing system (50) connected to a radio network controller (30) of the mobile network, which, for each user equipment of a defined group of traced user equipments, is configured to receive from the radio network controller:
- the average transmitted carrier power $I_{or}$ of the serving cell, the cell serving the traced user equipment, as measured by the serving base station (20) over a given period of time;
- the power setting of the CPICH channel *CPICH Tx power* in the serving cell as configured in the network,
- the following user equipment measurements reported over said given period of time: *CPICH RSCP*, Received Signal Code Power of the CPICH channel, and *CPICH Ec/No,* Energy per chip over Noise of the CPICH channel; and wherein the tracing system comprises processing means for computing such geometry according to the following formula:

$$G = \frac{I_{or}}{\dfrac{CPICH\,Tx\,power}{CPICH\,Ec/No} - I_{or} - \dfrac{Nt.CPICH\,Tx\,power}{CPICH\,RSCP}}$$

where $N_t$ is the thermal noise generated within the user equipment.

3. System according to claim 2, wherein the tracing system is hosted in an operation and maintenance centre of the mobile network.

UTRAN 40

**UTRAN 40**

RNC 30

Tracing system 50

cell trace

Tx carrier
power ($I_{or}$)
measurements

CPICH
measurements
(CPICH RSCP,
CPICH Ec/No)

IMSI trace

Node B 20

UE 10

**FIG. 1**

① Select target cell or cluster of cells

② Select target user(s)
(identify IMSI's to be traced)

③ Configure traces

④ Activate traces via OMC

⑤ Post-processing of traces to derive geometry G of user(s)

5a → Geometry statistics experienced by users in a given cell or cluster of cell

5b → Geometry statistics of a given user

**FIG. 2**

FIG. 3

**European Patent Office**

**EUROPEAN SEARCH REPORT**

Application Number

EP 08 38 0093

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | "Universal Mobile Telecommunications System (UMTS); Physical layer; Measurements (FDD) (3GPP TS 25.215 version 7.4.0 Release 7); ETSI TS 125 215" ETSI STANDARDS, LIS, SOPHIA ANTIPOLIS CEDEX, FRANCE, vol. 3-R1, no. V7.4.0, 1 January 2008 (2008-01-01), XP014040619 ISSN: 0000-0001 * the whole document * | 1-3 | INV. H04B17/00 |
| A | WO 2006/095913 A (NIPPON ELECTRIC CO [JP]; ISAAC PAUL [AU]; STANHOPE DAVID [AU]; WANG XI) 14 September 2006 (2006-09-14) * page 9, line 1 - page 10, line 15 * * figure 2 * | 1-3 | |
| A | EP 1 892 847 A (HUAWEI TECH CO LTD [CN]) 27 February 2008 (2008-02-27) * abstract * * paragraph [0014] - paragraph [0031] * * claims 1-12 * | 1-3 | TECHNICAL FIELDS SEARCHED (IPC) H04B H04Q |
| A | US 2003/016641 A1 (TERRY STEPHEN E [US] ET AL) 23 January 2003 (2003-01-23) * abstract * * figure 3 * * paragraph [0023] - paragraph [0032] * | 1-3 | |

The present search report has been drawn up for all claims

| Place of search | Date of completion of the search | Examiner |
|---|---|---|
| Munich | 28 August 2008 | Mier, Ana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 101 427 A1**

## ANNEX TO THE EUROPEAN SEARCH REPORT
## ON EUROPEAN PATENT APPLICATION NO.

EP 08 38 0093

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2008

| Patent document cited in search report | | Publication date | Patent family member(s) | | Publication date |
|---|---|---|---|---|---|
| WO 2006095913 | A | 14-09-2006 | AU | 2006200038 A1 | 28-09-2006 |
| | | | EP | 1856820 A1 | 21-11-2007 |
| EP 1892847 | A | 27-02-2008 | WO | 2008025204 A1 | 06-03-2008 |
| | | | CN | 1913386 A | 14-02-2007 |
| US 2003016641 | A1 | 23-01-2003 | NONE | | |

EPO FORM P0459

For more details about this annex : see Official Journal of the European Patent Office, No. 12/82

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6466797 B

- US 2005272429 A